Europäisches Patentamt

European Patent Office

Office européen des brevets

(11) Veröffentlichungsnummer: **0 182 162**
**B1**

(12) **EUROPÄISCHE PATENTSCHRIFT**

(45) Veröffentlichungstag der Patentschrift:
**19.04.89**

(21) Anmeldenummer: **85113867.7**

(22) Anmeldetag: **31.10.85**

(51) Int. Cl.⁴: **A 01 B 33/12,** A 01 B 49/02

(54) Schlepperbetriebene Bodenbearbeitungsmaschine.

(30) Priorität: **02.11.84 DE 3440106**

(43) Veröffentlichungstag der Anmeldung:
**28.05.86 Patentblatt 86/22**

(45) Bekanntmachung des Hinweises auf die Patenterteilung:
**19.04.89 Patentblatt 89/16**

(84) Benannte Vertragsstaaten:
**AT BE CH DE FR GB IT LI LU NL SE**

(56) Entgegenhaltungen:
**EP-A-0 083 404**
**DE-A-2 728 432**
**DE-A-2 945 062**
**FR-A-2 371 865**
**FR-A-2 416 634**
**NL-A-7 206 943**
**US-A-4 068 083**

(73) Patentinhaber: **Amazonen- Werke H. Dreyer GmbH & Co. KG, Postfach 51, D-4507 Hasbergen- Gaste (DE)**

(72) Erfinder: **Grosse- Scharmann, Franz, Dr., Waldstrasse 35, D-2872 Hude i.O. (DE)**
Erfinder: **Gieseke, Reinhard, Schützenhofstrasse 47, D-2900 Oldenburg (DE)**
Erfinder: **Higgen, Reinhard, Gartenstrasse 1, D-2872 Hude i.O. (DE)**
Erfinder: **Gattermann, Bernd, Eichenweg 3, D-2872 Hude i.O. (DE)**

(74) Vertreter: **Patentanwälte Grünecker, Kinkeldey, Stockmair & Partner, Maximilianstrasse 58, D-8000 München 22 (DE)**

## Beschreibung

Die Erfindung betrifft eine schlepperbetriebene Bodenbearbeitungsmaschine, wie sie im Oberbegriff des Anspruchs 1 und im Oberbegriff des Anspruchs 2 näher beschrieben ist.

Eine solche Bodenbearbeitungsmaschine ist aus der FR-A-2 416 634 bekannt. Dort sind am Rahmen der Bodenwalze seitlich erstreckende Halterungen fest angebracht, die sich in Fahrtrichtung etwa bis in einen Bereich, der zwischen den nicht gezeigten Bodenbearbeitungswerkzeugen und der Bodenbearbeitungswalze liegt, erstrecken. Am freien Ende dieser seitlich sich erstreckenden Halterungen ist eine Schwenkachse befestigt, die Abschirmelemente trägt, welche seitlich bis in den Bereich der nicht gezeigten Bodenbearbeitungswerkzeuge reichen. Die Abschirmelemente können um die Schwenkachse, die vertikal gerichtet ist, unter Beibehaltung ihrer Vertikalausrichtung seitlich nach außen schwenken, beispielsweise um ein Einklemmen von Steinen zwischen den Bodenbearbeitungswerkzeugen und den Abschirmelementen zu vermeiden.

Diese bekannte Konstruktion hat mehrere Nachteile. Durch die in der Horizontalebene starre Verbindung zwischen den Abschirmelementen und der Nachlaufwalze führen die Abschirmelemente jede Vertikalbewegung der Bodenwalze mit aus. Wenn sich daher die Lage der Bodenwalze gegenüber den Bodenbearbeitungswerkzeugen ändert, ändert sich auch die Lage der Abschirmelemente bezüglich der Bodenbearbeitungswerkzeuge. Insbesondere werden diese Abschirmelemente zumindest dann gegenüber den Bodenbearbeitungswerkzeugen mit verschwenkt wenn die Nachlaufwalze nicht über Parallelführungen gegenüber den Bodenbearbeitungswerkzeugen verstellbar ist. Die Änderung der Relativlage zwischen Bodenbearbeitungswerkzeugen und der Bodenwalze kann daher dazu führen, daß die Abschirmelemente entweder zu tief in den Boden eindringen oder aber den Boden überhaupt nicht berühren. Letzteres kann insbesondere dazu führen, daß der von den Bodenbearbeitungswerkzeugen gelockerte Boden seitlich zwischen der Bodenbearbeitungsmaschine und den Abschirmelementen herausfließt. Darüber hinaus ist von Nachteil, dan die Schwenkachse der Abschirmelemente etwa in der Mitte zwischen Nachlaufwalze und Bodenbearbeitungswerkzeugen liegt. Die Abschirmelemente sind also nicht ganz bis zur Bodenwalze geführt, so daß zwischen den Abschirmelementen und der Bodenwalze ebenfalls gelockerter Boden ausdringen kann. Deshalb sind dort die Abschirmelemente an ihrem hinteren Ende mit einer nach innen weisenden Abwinkelung versehen und es ist ein zusätzlicher Zustreicherbalken mit zur Fahrtrichtung schräg gestellten Endelementen vorhanden, was insgesamt einen relativ großen Konstruktionsaufwand bedingt.

Aus der DE-OS 2 728 432 ist eine schlepperbetriebene Bodenbearbeitungsmaschine bekannt, bei der als Schilde ausgebildete Abschirmelemente um Horizontalachsen seitlich ausschwenken können, die in Fahrtrichtung verlaufen. Eine Schwenkbewegung um eine vertikal weisende Achse erfolgt nicht.

Aus der DE-OS 27 52 746 bzw. der FR-A-2 371 865 ist es bekannt, die Abschirmelemente bei einer schlepperbetriebenen Bodenbearbeitungsmaschine fest an den Tragbalken anzuordnen, die die Nachlaufwalze tragen. Über die Höhenverstellung der Nachlaufwalze können auch die Abschirmelemente verstellt werden. Ein selbständiges Ausweichen dieser Elemente ist nicht möglich. Schließlich ist auch aus der DE-OS 2 749 148 eine Bodenbearbeitungsmaschine bekannt geworden, die seitliche, als Platten ausgebildete Abschirmelemente aufweist, welche auf ihrer vorderen und hinteren Seite mit zwei Tragstreben an den Tragarmen der Nachlaufwalze starr befestigt sind. Die Abschirmelemente müssen hier ebenfalls bei der Verstellung der Bodenbearbeitungsmaschine gegenüber der Nachlaufwalze in der Höhe gegenüber den Tragarmen der Nachlaufwalze verstellt werden, da sich die Stellung der Tragarme in Bezug auf den Boden verändert. Darüber hinaus sind diese seitlichen Abschirmelemente auf den Einsatz bei einer Kreiselegge beschränkt. Außerdem besteht der Nachteil, daß zwischen dem Abschirmelement und der Nachlaufwalze Erde seitlich herausfließt und einen Grenzwall bildet. Dieser Grenzwall wirkt sich sehr nachteilig aus, insbesondere bei der Arbeit in Kombination mit einer hinter der Nachlaufwalze angeordneten Drillmaschine, weil dadurch die Ablagetiefe des bereits gesäten Getreides auf den angrenzenden Streifen erhöht wird. Es kommt zu Auflaufschäden oder Verzögerungen, die den Ertrag negativ beeinflussen. Weiterhin stören diese Wellen beim Einsatz des Mähdreschers.

Aus der EP-A-0 083 404 ist eine Bodenbearbeitungsmaschine mit rotierenden Werkzeugen bekannt, wobei seitlich quer zur Fahrtrichtung auf jeder Seite der Bodenbearbeitungsmaschine Abschirmelemente angeordnet sind. Die Abschirmelemente sind über einen Halter oberhalb des Rahmens der Bodenbearbeitungsmaschine befestigt. Der Halter weist zwei horizontale Achsen auf, von denen eine quer zur Fahrtrichtung und die andere in Fahrtrichtung verläuft. Durch diese Aufhängung der Abschirmelemente können diese seitlich nach außen und oben verschwenkt werden. Wenn jedoch eine unterschiedliche Arbeitstiefe der Maschine gewünscht ist, muß eine Höhenanpassung der Abschirmelemente vorgenommen werden.

Der Erfindung liegt die Aufgabe zugrunde, für verschiedene Bodenbearbeitungsmaschinen geeignete und universell einsetzbare seitliche Abschirmelemente zu schaffen, die seitliches Austreten von Bodenmaterial zuverlässig in jeder beliebigen Arbeitsstellung der Bodenbearbeitungswerkzeuge zur Nachlaufwalze verhindern.

Diese Aufgabe wird bei einer schlepperbetriebenen Bodenbearbeitungsmaschine mit den Merkmalen des Oberbegriffs des Anspruchs 1 durch die kennzeichnenden Merkmale dieses Anspruchs gelöst. Ebenso wird diese Aufgabe bei einer Bodenbearbeitungsmaschine mit den Merkmalen nach dem Oberbegriff des Anspruchs 2 durch die kennzeichnenden Merkmale dieses Anspruchs gelöst.

Dadurch, daß die Halterung der Abschirmelemente in deren hinterem Bereich in einem der Nachlaufwalze sehr naheliegenden Bereich über eine zusätzliche horizontale Shwenkachse bzw. über ein Kugelgelenk mit derselben verbunden ist, können die Abschirmelemente auch bei Veränderung der Arbeitstiefe der Bodenbearbeitungswerkzeuge und der Lage von Walze und Bodenbearbeitungsmaschine zueinander immer eine gleichbleibende Einstellung bezüglich der Bodenbearbeitungsmaschine einnehmen. Die Abschirmelemente können somit beispielsweise für eine Rüttelegge, eine Kreiselegge oder auch einen Kreiselgrubber gleichermaßen eingesetzt werden. Durch die Lagerung der Abschirmelemente auf der Höhe der Nachlaufwalze liegen die Schwenkachsen derart weit hinten, dicht an der Nachlaufwalze, daß der vom Bodenbearbeitungswerkzeug der Bodenbearbeitungsmaschine gelockerte Boden nicht seitlich zwischen der Bodenbearbeitungsmaschine und der Nachlaufwalze herausfließen kann, sondern vielmehr gleichmäßig über die Arbeitsbreite der Nachlaufwalze verteilt wird. Dies ist in jeder beliebigen Arbeitsstellung der Bodenbearbeitungsmaschine gewährleistet, weil aufgrund der horizontalen quer zur Fahrtrichtung liegenden Schwenkachse eine automatische Anpassung der Stellung der Abschirmelemente erfolgen kann. Eine Einstellung der Abschirmelemente bei Veränderung der Arbeitstiefe ist ebenfalls nicht erforderlich, weil die Abschirmelemente an dem Rahmen der Nachlaufwalze, die immer auf der Oberfläche des Bodens abrollt, befestigt sind. Bei Lageveränderungen zwischen Bodenbearbeitungsmaschine und Nachlaufwalze stellen sich die Abschirmelemente automatisch auf die neue Position ein. Schließlich können die Abschirmelemente sehr weit nach vorne reichen und somit auch zusätzlich den Austritt von Erde seitlich neben der Bodenbearbeitungsmaschine und vor der Bodenbearbeitungsmaschine verhindern. Auch bei derartig langen Abschirmelementen ist keine Einstellung der Abschirmelemente bei einer Änderung der Arbeitstiefe der Bodenbearbeitungswerkzeuge bzw. eine Tiefer- bzw. Höherstellung der Bodenbearbeitungsmaschine erforderlich.

Die Bildung der Schwenkachsen für die Abschirmelemente wird nach dem Anspruch 1 durch ein Kreuzgelenk und nach dem Anspruch 2 durch ein Kugelgelenk gebildet. Die Abschirmelemente werden jeweils durch Federn in ihre Arbeitsstellung gedrückt.

In einer vorteilhaften Ausgestaltung der Erfindung reichen die Abschirmelemente entgegen der Fahrtrichtung gesehen zumindest bis zur Vorderkante der Bodenwalze.

Bei sehr fließfähigen Böden läßt sich ein sicherer Abschluß insbesondere dadurch sicherstellen, daß gemäß einer weiteren erfindungsgemäßen Ausgestaltung die Abschirmelemente zumindest bis zur Aufstandsfläche der Bodenwalze auf den Boden reichen.

In einer bevorzugten Ausführungsform ist erfindungsgemäß vorgesehen, daß die Federn, die die Abschirmelemente in ihre Arbeitsstellung drücken jeweils auf der Außenseite der Abschirmelemente angeordnet sind. Infolge dieser Maßnahme sind die Federn geschützt angeordnet und sie behindern nicht den freien Durchfluß des Bodens nach hinten. Wenn die Federn als Blattfedern ausgebildet sind, beanspruchen sie nur sehr wenig Raum, so daß eine kompakte, raumsparende und robuste Anordnung und Ausbildung der Federn erreicht wird.

Bei einer bevorzugten Ausführung der Erfindung ist vorgesehen, daß zwischen einem über die Halterung nach hinten ragenden Stück des Abschirmelementes und dem Rahmen der Bodenwalze ein federndes Element angeordnet ist. dieses als Entlastungsfeder wirkendes federndes Element hat zur Folge, daß die Abschirmelemente schon bei einer sehr geringen Kraft angehoben werden können, so daß sich beispielsweise vor den Abschirmelementen kein Stroh aufschieben kann. Dieses ist insbesondere auf strohreichen Böden sehr wichtig. Schon bei kleinem Stroh- bzw. Stroh-Boden-Gemisch weichen diese Abschirmelemente vorne nach oben aus und das Stroh gleitet leicht unter den Abschirmelementen hindurch, ohne daß es zu Stauungen bzw. zur Bildung von Strohhaufen kommt. Durch Varrieren der Federkraft kann man hier jede gewünschte Gewichtsentlastung bzw. jede gewünschte Reduzierung des Auflagedruckes der Abschirmelemente auf dem Boden erreichen.

Die Anordnung der Halterung für die Abschirmelemente im Bereich der Nachlaufwalze kann entweder unmittelbar am Rahmen der Nachlaufwalze erfolgen oder aber auch an den Tragarmen, die zwischen der Nachlaufwalze und der Bodenbearbeitungsmaschine angeordnet sind. Hierbei ist jedoch zu beachten, daß die Halterung mit den gebildeten Schwenkachsen jeweils an dem der Nachlaufwalze entgegen der Fahrtrichtung gesehen sehr naheliegenden Bereich der Tragarme angeordnet sind.

Ein besonders gutes Gleiten der Abschirmelemente auf dem Boden, ohne daß es zum Aufschieben von Stroh durch die Abschirmelemente kommt, wird dadurch sichergestellt, daß die Abschirmelemente zumindest auf ihrem vorderenunteren Bereich, auf ihrer Schmalseite, eine runde Querschnittskontur aufweisen. Hierbei kann diese runde Querschnittskontur beispielsweise von einem Rohr gebildet werden.

Weiter Einzelheiten und Vorteile der Erfindung sind den übrigen Unteransprüchen, der Beispielsbeschreibung und den Zeichnungen zu entnehmen. Hierbei zeigen

Fig. 1 eine erfindungsgemäß ausgebildete Bodenbearbeitungsmaschine mit Nachlaufwalze in der Vorderansicht,

Fig. 2 die Bodenbearbeitungsmaschine gemäß Fig. 1 in der Draufsicht,

Fig. 3 die Bodenbearbeitungsmsschine gemäß Fig. 1 mit Nachlaufwalze und seitlichem Abschirmelement in der Seitenansicht und in vergrößertem Maßstab,

Fig. 4 das seitliche Abschirmelement gemäß Fig. 3 in der Draufsicht,

Fig. 5 eine weitere erfindungsgemäß ausgebildete Bodenbearbeitungsmaschine mit Nachlaufwalze in der Vorderansicht,

Fig. 6 die Bodenbearbeitungsmaschine gemäß Fig. 5 mit Nachlaufwalze und seitlichem Abschirmelement in der Seitensnsicht und in vergrößertem Maßstab,

Fig. 7 das seitliche Abschirmelement gemäß Fig. 6 in der Draufsicht,

Fig. 8 eine weitere Bodenbearbeitungsmaschine mit Nachlaufwalze und seitlichem Abschirmelement in der Seitenansicht und

Fig. 9 das seitliche Abschirmelement gemäß Fig. 8 in der Draufsicht.

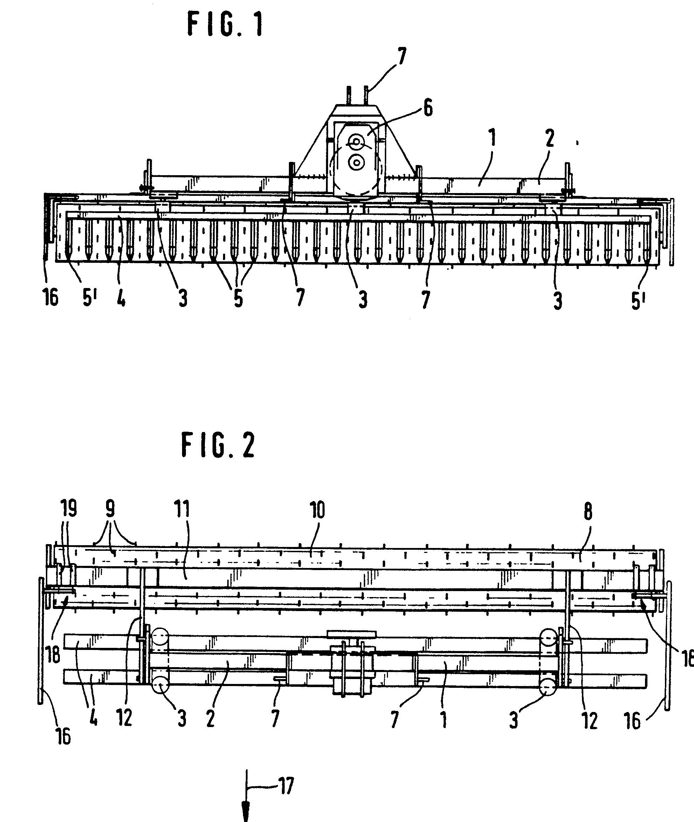

Die Bodenbearbeitungsmaschine gemäß den Fig. 1 bis 4 ist als Rüttelegge 1 ausgebildet. An dem Rahmen 2 der Rüttelegge 1 sind mit Hilfe der Schwingen 3 die beiden Eggenbalken 4 mit den als Zinken 5 ausgebildeten Bodenbearbeitungswerkzeugen angeordnet. Die Eggenbalken 4 und somit auch die Zinken 5 werden über das Taumelgetriebe 6 in hin- und herschwingender Weise angetrieben, in dem das Taumelgetriebe 6 von der Schlepperzapfwelle des die Bodenbearbeitungsmaschine ziehenden und nicht dargestellten Schleppers in bekannter Weise angetrieben wird. An dem Rahmen 2 sind die Dreipunktkupplungselemente 7 angeordnet, über die die Rüttelegge 1 in bekannter Weise an die Dreipunktkupplungsvorrichtung eines Schleppers angebaut werden kann.

Hinter der Rüttelegge 1 ist die als Packerwslze 8 ausgebildete Nachlaufwalze angeordnet. Die Packerwalze 8 weist den mit den Zacken 9 besetzten Walzenkörper 10 und den Rahmen 11 auf, in dem der Walzenkörper 10 drehbar gelagert ist. An dem Rahmen 11 sind die Tragarme 12 angeordnet, über die die Packerwalze 8 mit dem Rahmen 2 der Rüttelegge 1 verbunden ist. Die Arbeitstiefe der Zinken 5 wird durch die Packerwalze 8 bestimmt, denn die an dem Rahmen 2 der Rüttelegge 1 angeordneten Anschlagbolzen 13 liegen auf den Tragarmen 12 auf. Durch Umstecken der Anschlagbolzen 13 in andere Bohrungen 14 der an dem Rahmen 2 der Rüttelegge 1 angeordneten Verstellstücke 15 kann die jeweils gewünschte Arbeitstiefe der Zinken 5 eingestellt werden.

Seitlich neben den äußeren Zinken 5' sind auf beiden Seiten der Bodenbearbeitungsmaschine die als Seitenplatten 16 ausgebildeten Abschirmelemente angeordnet. Die Seitenplatten 16 sind jeweils aufrecht stehend und in Fahrtrichtung 17 der Rüttelegge weisend angebracht. Die Seitenplatten 16 dienen jeweils zur Begrenzung der von den Zinken 15 nach außen bewegten Bodenteile und reichen in der Arbeitsstellung der Rüttelegge 1 zumindest bis etwa zur Bodenoberfläche. Die Seitenplatten 16 sind jeweils mit der Halterung 18 an dem Rahmen 11 der Packerwalze 8 gelenkig befestigt. Die Halterung 18 weist jeweils zunächst die beiden an dem Rahmen 11 der Packerwalze 8 festgeklemmten Bügel 19 auf. An den Bügeln 19 sind die Lagerlaschen 20 angeschweißt. In diesen Lagerlaschen 20 ist die Halterungswelle 21 angeordnet, die mit den Stiften 22 in den Lagerlaschen gesichert ist. Auf dem äußeren Ende der Halterungswelle 21 ist die Seitenplatte 16 mittels des Kugelgelenkes 23 angeordnet. Zwischen der Seitenplatte 16 und der Lagerlasche 20 ist an der Halterungswelle 21 das Anschlagsstück 24 angeschweißt, welches die Lage der Seitenplatte 16 bestimmt. Auf der Außenseite der Seitenplatte 16 sind die als Blattfedern 25 ausgebildeten federnden Elemente angeordnet, die die Seitenplatte 16 in ihrer Arbeitsstellung gegen das Anschlagstück 24 drücken. Die Blattfedern 25 sind mit der Schraube 26, die in die Stirnseite der Halterungswelle 21 eingeschraubt ist, an der halterung 18 befestigt. Damit die Blattfedern 25 nicht von der Seitenplatte 16 abrutschen, sind jeweils neben dem Paket der Blattfedern 25 die Klötze 27 auf der Seitenplstte 16 angeschweißt. An der Rückseite der Seitenplatte 16 befindet sich das nach hinten über das Kugelgelenk 23 ragende Stück 28. Zwischen diesem Stück 28 und dem Rahmen 11 der Packerwalze 8 ist das als Zugfeder ausgebildete federnde Element angeordnet. Die Zugfeder 29 kann in verschiedenen Abständen zu dem Kugelgelenk 23 an dem Stück 28 befestigt werden.

Die Hinterkante 30 der Seitenplatte 16 reicht entgegen der Fahrtrichtung 17 gesehen über die Vorderkante der Packerwalze 8 nach hinten hinaus. Hierbei reicht die Hinterkante der Seitenplstte 16 etwa bis zur Aufstandsfläche 31 der Packerwalze 8 auf den Boden. Der hintere Bereich der Seitenplatte 16 ist in Richtung der Packerwalze abgekantet. Außerdem ist an dem hinteren unteren Bereich der Seitenplatte 16 noch das zusätzliche in Richtung der Packerwalze 8 weisende Blech 32 angeschraubt. Somit wird der Bereich zwischen der Packerwalze 8 und der Seitenplatte 16 abgeschlossen, so daß keine Erde zwischen der Bodenbearbeitungsmaschine und der Packerwalze 8 seitlich austreten kann. Die Seitenplatte 16 ragt nach vorn in Fahrtrichtung 17 gesehen über die Zinken 5 der Rüttelegge 1 hinaus. Weiterhin weist die Seitenplatte 16 auf ihrer unteren Vorderseite 33 einen schräg nach vornoben gebogenen Bereich auf, der in die Oberseite der Seitenplatte 16 mit einem Bogen ausläuft. Die Seitenplatte 16 ist auf ihrer Schmalseite mit dem Rohr 34 eingefaßt, so daß sich eine runde Querschnittskontur ergibt.

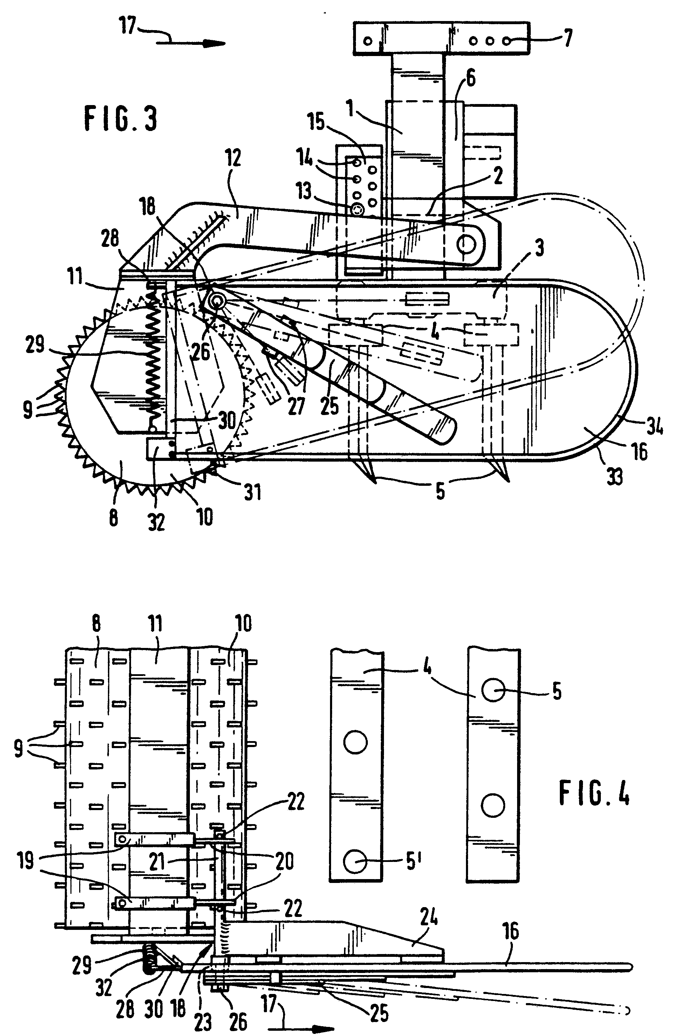

Aufgrund des Kugelgelenkes 23 kann die Seitenplatte 16, wie in Fig. 3 mit strichpunktierten Linien angedeutet, nach oben ausweichen und wenn beispielsweise ein Stein zwischen die Seitenplatte 16 und die Zinken 5' gerät, kann die Seitenplatte 16 gegen die Federkraft der Blattfeder 25 seitlich ausweichen, wie in Fig. 4 ebenfalls mit strichpunktierten Linien angedeutet ist. Die Seitenplatte 16 kann aufgrund des Kugelgelenkes 23 in allen in Frage kommenden Ebenen gegen die Federkraft der Blattfedern 25 ausweichen.

Durch die Anbringung der Feder 29 zwischen dem Rahmen 11 der Packerwalze 8 und dem über das Kugelgelenk 23 hinausragende Stück 28 der Seitenplatte 16 wird erreicht, daß die Seitenplatte 16 schon bei einer sehr geringen Kraft angehoben wird, so daß sich beispielsweise vor der Seitenplatte 16 kein Stroh aufschiebt. Schon bei kleinen Strohmengen weicht die Seitenplatte 16, wie in Fig. 3 mit strichpunktierten Linien dargestellt, nach oben aus und das Stroh gleitet leicht unter dem Seitenblech hindurch, ohne daß es zu Stauungen bzw. zur Bildung von Strohhaufen kommt.

Durch die alleinige Lagerung bzw. Befestigung der Seitenplatte 16 in dem hinteren Bereich der Seitenplatte 16 in dem Bereich der Packerwalze 8 ist kein separate Höheneinstellung der Seitenplatte 16 gegenüber der Packerwalze 8 und der Rüttelegge 1 erforderlich. Denn durch diese Befestigung der Seitenplatte 16 an dem Rahmen 11 der Packerwalze 8 ist eine Nachregulierung der Seitenplatte 16 nicht erforderlich, da die Packerwalze immer auf der Bodenoberfläche abrollt. Bei jeder Einstellung der Rüttelegge 1 und jeder Arbeitstiefe der Zinken 5 nimmt die Seitenplatte 16 immer automatisch die richtige Stellung ein.

Durch die alleinige Lagerung bzw. Befestigung der Seitenplatte 16 in dem hinteren Bereich der Seitenplatte 16 in dem Bereich der Packerwalze 8 wird der mehr oder weniger völlige Abschluß zwischen Packerwalze 8 und der Seitenplatte 16, gegen das Herausfließen von Boden zwischen Seitenplatte 16 und Packerwalze 8, erreicht. Dieser Abschluß ist in jeder beliebigen Arbeitsstellung der Rüttelegge 1 zur Packerwalze 8 gewährleistet.

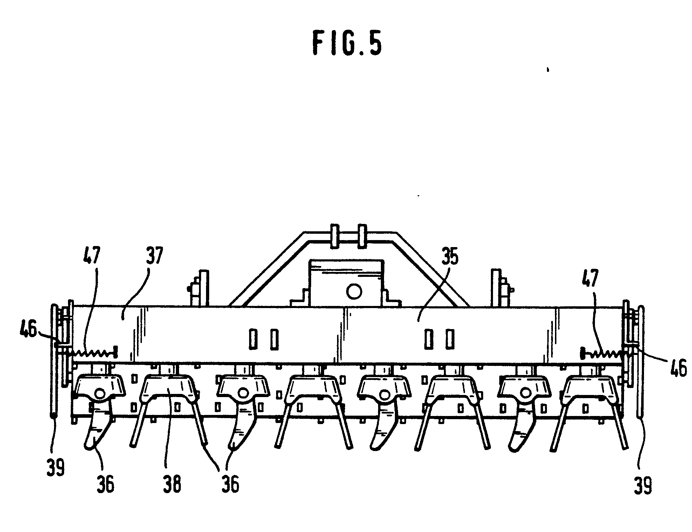

Die Bodenbearbeitungsmaschine nach den Fig. 5 bis 7 ist als Kreiselgrubber 35 ausgebildet. Die als Zinken 36 ausgebildeten Bodenbearbeitungswerkzeuge des Kreiselgrubbers 35 werden in bekannter Weise von der Schlepperzapfwelle des nicht dargestellten Schleppers, der den Kreiselgrubber 35 über den Acker zieht, angetrieben. Hinter dem Kreiselgrubber 35 ist die als Packerwalze 8 ausgebildete Nachlaufwalze angeordnet. Die Packerwalze 8 weist den Rahmen 11 auf. An dem Rahmen 11 der Packerwalze 8 sind die Tragarme 12 angeordnet, über die die Packerwalze 8 mit dem Rahmen 37 des Kreiselgrubbers 35 verbunden ist. Die Arbeitstiefe der Zinken 36 wird durch die Packerwalze 8 bestimmt, denn die an dem Rahmen 37 des Kreiselgrubbers 35 angeordneten Anschlagbolzen 13 liegen auf den Tragarmen 12 auf. Durch Umstecken der Anschlagbolzen 13 in die entsprechende Bohrung 14 der an dem Rahmen 37 des Kreiselgrubbers 35 angeordneten Verstellstücke 15 kann die jeweils gewünschte Arbeitstiefe der Zinken 36 eingestellt werden.

Seitlich neben den äußeren Werkzeugkreiseln 38, an denen die Zinken 36 angeordnet sind, sind auf beiden Seiten des Kreiselgrubbers 35 die als Seitenplatten 39 ausgebildeten Abschirmelemente angeordnet. Die Seitenplatten 39 sind jeweils aufrecht stehend und in Fahrtrichtung 17 des Kreiselgrubbers 35 weisend angebracht. Die Seitenplatten 39 dienen jeweils zur Begrenzung der von den Zinken 36 nach außen verlagerten Bodenteile. Diese Seitenplatten 39 reichen in der Arbeitsstellung des Kreiselgrubbers 35 zumindest bis etwa zur Bodenoberfläche. Die Seitenplatten 39 sind jeweils mit der Halterung 40 an dem Rahmen 11 der Packerwalze 8 gelenkig befestigt. Die Halterung 40 ist als Kreuzgelenk ausgebildet. Die Halterung 40 weist jeweils zunächst die beiden an dem Rahmen 11 der Packerwalze 8 festgeklammerten Bügel 19 auf. An den Bügeln 19 sind die Lagerlaschen 20 angeschweißt. In diesen Lagerlaschen 20 ist die Halterungswelle 41 angeordnet, die mit den Sicherungsringen 42 in den Lagerlaschen 20 gesichert ist. An dem äußeren Ende der Halterungswelle 41 ist die Buchse 43 angeschweißt. Weiterhin sind an dem hinteren-oberen Bereich der Seitenplatte 39 die beiden Buchsen 44 angeschweißt. Durch diese Buchsen 43 und 44 ist der Bolzen 45 gesteckt, so daß die Seitenplatte 39 an der Halterungswelle 41 gelenkig befestigt ist. Weiterhin ist an dem Rahmen 37 des Kreiselgrubbers 35 das Anschlagstück 46 angeschweißt, welches die Schwenkbewegung der Seitenplatte 39 in Richtung der Zinken 36 begrenzt. Zwischen der Seitenplatte 39 und dem Rahmen 37 des Kreiselgrubbers 35 ist das als Zugfeder 47 ausgebildete federnde Element angeordnet, welches die Seitenplatte 39 in ihre Arbeitsstellung zieht.

Die Hinterkante 48 der Seitenplatte 39 reicht entgegen der Fahrtrichtung 17 gesehen über die Vorderkante der Packerwalze 8 nach hinten hinaus. Hierbei reicht diese Hinterkante 48 der Seitenplatte 39 etwa bis zur Aufstandsfläche 31 der Packerwalze 8 auf den Boden. Der hintere Bereich der Seitenplatte 39 ist in Richtung der Packerwalze 8 abgekantet. Außerdem kann noch an dem hinteren - unteren Bereich der Seitenplatte 39 das mit gestrichelten Linien angedeutete Blech 49 angeschraubt sein. Die Seitenplatte 39 ragt nach vorn in Fahrtrichtung 17 gesehen über den Kreiselgrubber 35 hinaus. Weiterhin weist die Seitenplatte 39 auf ihrer unteren Vorderseite einen schräg nach oben verlaufenden Bereich auf, der in die Oberseite der Seitenplatte 39 mit einem Bogen ausläuft. Die Seitenplatte 39 ist auf ihrer Schmalseite mit dem Rohr 34 eingefaßt, so daß sich eine runde Querschnittskontur ergibt.

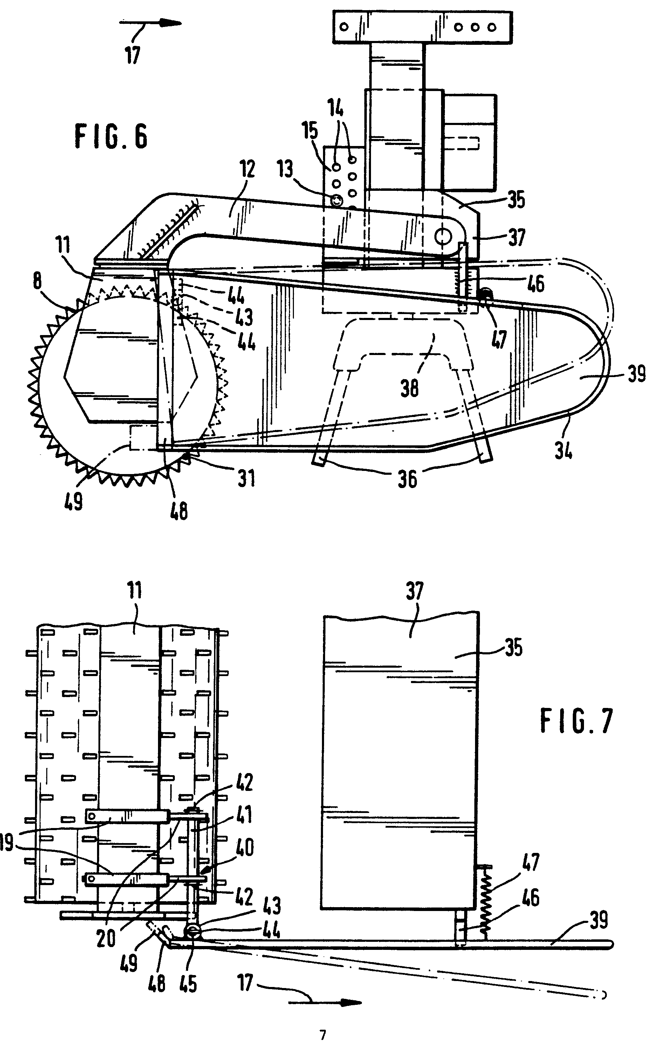

Aufgrund der als Kreuzgelenk ausgebildeten Halterung 40 kann die Seitenplatte 39, wie in Fig. 6 mit strichpunktierten Linien angedeutet ist, nach oben und, wie in Fig. 7 ebenfalls mit strichpunktierten Linien angedeutet ist, zur Seite ausweichen. Somit ergeben sich die entsprechenden Vorteile, wie sie hinsichtlich des Ausführungsbeispieles gemäß den Fig. 1 bis 4 geschildert sind.

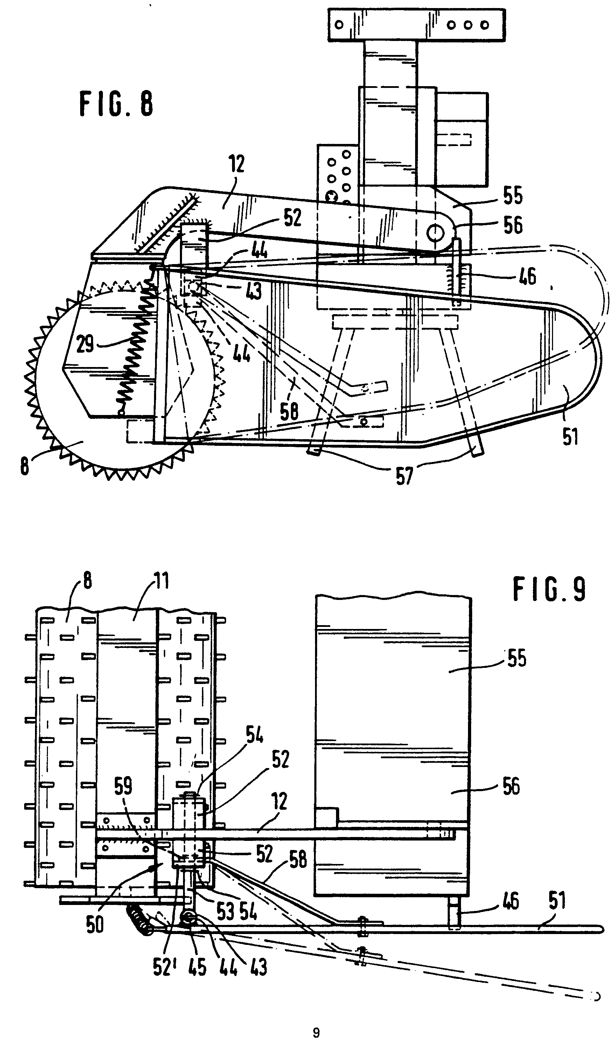

Das Ausführungsbeispiel gemäß Fig. 8 und 9 unterscheidet sich im wesentlichen von dem Ausführungsbeispiel gemäß den Fig. 5 bis 7 durch Anordnung der Halterung für die Seitenplatten an der Nachlaufwalze. Die Halterung 50, mit der die Seitenplatten 51 jeweils an dem Rahmen der als Packerwalze 8 ausgebildeten Nachlaufwalze befestigt sind, ist ebenfalls als Kreuzgelenk ausgebildet. Die Halterung 50 weist die an den Tragarmen 12 angeschweißten Lagerlaschen 52 auf. In diesen Lagerlaschen 52 ist die Halterungswelle 53 angeordnet, die mit den Sicherungsringen 54 in den Lagerlaschen 52 gesichert ist. An dem äußeren Ende der Halterungswelle 53 ist die Buchse 43 angeschweißt. Weiterhin sind an dem hinteren - oberen Bereich der Seitenplatte 51 die beiden Buchsen 44 angeschweißt. Durch diese Buchsen 43 und 44 ist der Bolzen 45 gesteckt, so daß die Seitenplatten 51 an der Halterungswelle 53 gelenkig befestigt ist. Weiterhin ist an dem Rahmen 55 der als Kreiselegge 56 ausgebildeten Bodenbearbeitungsmaschine das Anschlagstück 46 befestigt, welches die Schwenkbewegung der Seitenplatte 51 in Richtung der Zinken 57 der Kreiselegge begrenzt. Zwischen der Seitenplatte 51 und dem Rahmen 11 der Packerwalze 8 ist das als Blattfeder 58 ausgebildete federnde Element angeordnet, welches die Seitenplatte 51 in ihrer Arbeitsstellung hält. Die Blattfeder 58 ist an ihrem unteren Ende abgekantet und an der Seitenplatte 51 angeschraubt. An ihrem oberen Ende ist die Blattfeder 58 ebenfalls abgekantet. In dem oberen abgekanteten Ende der Blattfeder 58 befindet sich die Bohrung 59, so daß die Blattfeder 58 vor der Lagerlasche 52' auf der Halterungswelle 58 befestigt ist. Die Blattfeder 58 kann, falls erforderlich, leicht in sich gebogen sein, um so einen größeren Federweg für das seitliche Ausweichen der Seitenplatte 51, wie in Fig. 9 mit strichpunkterten Linien dargestellt, zu erhalten. Außerdem kann die Seitenplatte 51 nach oben ausweichen, wie in Fig. 8 mit strichpunktierten Linien dargestellt ist, in dem die Halterungswelle 53 in den Lagerlaschen verdreht wird.

## Patentansprüche

1. Schlepperbetriebene Bodenbearbeitungsmaschine mit angetriebenen Bodenbearbeitungswerkzeugen (5, 36, 57) und einer hinter den Bodenbearbeitungswerkzeugen angeordneten Nachlaufwalze (8), mit am Rahmen der Nachlaufwalze über eine Halterung angeordneten, aufrechten Abschirmelementen (16, 39, 51), die zumindest annähernd in Fahrtrichtung verlaufen und sich seitlich neben den äußeren Bodenbearbeitungswerkzeugen (5') zur Begrenzung der von den Bodenbearbeitungswerkzeugen seitlich nach außen bewegten Bodenteile erstrecken, wobei die Abschirmelemente (16, 39, 51) unter Beibehaltung ihrer Vertikalausrichtung nach außen jeweils um eine einen Teil der Halterung bildende vertikale Schwenkachse (45) gegen die Kraft einer Feder (25, 47, 58) verschwenkbar angeordnet sind,
<u>dadurch gekennzeichnet,</u>
daß die Halterung (18, 40, 50) die Abschirmelemente (16) in deren hinterem Bereich in einem der Nachlaufwalze (8) sehr naheliegenden Bereich über die Schwenkachse mit derselben verbindet, daß die Halterung eine weitere, sich horizontal und quer zur Fahrtrichtung erstreckende Schwenkachse (21, 41, 53) aufweist, die ebenfalls in dem der Nachlaufwalze sehr naheliegenden Bereich liegt, so daß die Abschirmelemente (16, 39, 51) unter Beibehaltung ihrer vertikalen Ausrichtlage horizontal und vertikal ausweichen können, und daß die Abschirmelemente zusammen mit der Nachlaufwalze gegenüber der Bodenbearbeitungsmaschine in der Höhe verstellbar angeordnet sind, so daß sie bei unterschiedlichen Arbeitstiefen der Bodenbearbeitungsmaschine stets die richtige Arbeitshöhe einnehmen.

2. Schlepperbetriebene Bodenbearbeitungsmaschine mit angetriebenen Bodenbearbeitungswerkzeugen (5, 36, 57) und einer hinter den Bodenbearbeitungswerkzeugen angeordneten Nachlaufwalze (8), mit am Rahmen der Nachlaufwalze über eine Halterung angeordneten, aufrechten Abschirmelementen (16, 39, 51), die zumindest annähernd in Fahrtrichtung verlaufen und sich seitlich neben den äußeren Bodenbearbeitungswerkzeugen (5') zur Begrenzung der von den Bodenbearbeitungswerkzeugen seitlich nach außen bewegten Bodenteile erstrecken, wobei die Abschirmelemente (16, 39, 51) unter Beibehaltung ihrer Vertikalausrichtung nach außen jeweils gegen die Kraft einer Feder (25, 47, 58) verschwenkbar angeodnet sind,
dadurch gekennzeichnet,
daß die Halterung (18, 40, 50) die Abschirmelemente (16) in deren hinterem Bereich in einem der Nachlaufwalze (8) sehr naheliegenden Bereich über ein Kugelgelenk (23) mit derselben verbindet, daß die Halterung eine sich horizontal und quer zur Fahrtrichtung erstreckende Schwenkachse (21, 41, 53) aufweist, die ebenfalls in dem der Nachlaufwalze sehr naheliegenden Bereich liegt, so daß die Abschirmelemente (16, 39, 51) unter Beibehaltung ihrer vertikalen Ausrichtlage horizontal und vertikal ausweichen können, und daß die Abschirmelemente (16, 39, 51) zusammen mit der Nachlaufwalze gegenüber der Bodenbearbeitungsmaschine in der Höhe verstellbar angeordnet sind, so daß sie bei unterschiedlichen Arbeitstiefen der Bodenbearbeitungsmaschine stets die richtige Arbeitshöhe einnehmen.

3. Bodenbarbeitungsmaschine nach Anspruch 1 oder 2,
dadurch gekennzeichnet,
daß die Abschirmelemente (16, 39, 51) entgegen der Fahrtrichtung (17) gesehen zumindest bis zur Vorderkante der Bodenwalze (8) reichen.

4. Bodenbearbeitungsmaschine nach Anspruch 3,
dadurch gekennzeichnet,
daß die Abschirmelemente (16, 39, 51) zumindest bis zur Aufstandsfläche (31) der Bodenwalze (8) auf den Boden reichen.

5. Bodenbearbeitungsmaschine nach wenigstens einem der vorangegangenen Ansprüche,
dadurch gekennzeichnet,
daß die Federn (25), welche die Abschirmelemente in ihre Arbeitsstellung drücken jeweils auf der Außenseite der Abschirmelemente angeordnet sind.

6. Bodenbearbeitungsmaschine nach Anspruch 5,
dadurch gekennzeichnet,
daß die Federn als Blattfedern (25, 58) ausgebildet sind.

7. Bodenbearbeitungsmaschine nach Anspruch 6,
dadurch gekennzeichnet,
daß die Federn (25, 28) an der Halterung (18, 50) der Abschirmelemente (19, 51) angeordnet sind.

8. Bodenbearbeitungsmaschine nach Anspruch 1 oder 2,
dadurch gekennzeichnet,
daß die Federn (47), welche die Abschirmelemente (39) in ihre Arbeitsstellung drücken, jeweils zwischen der vorderen Innenseite der Abschirmelemente (39) und dem Rahmen (37) der Bodenbearbeitungsmaschine (35) angeordnet sind.

9. Bodenbearbeitungsmaschine nach wenigstens einem der vorangegangenen Ansprüche,
dadurch gekennzeichnet,
daß die Abschirmelemente (51) über ihre Halterung (50) an den Tragarmen (12), die zwischen der Bodenwalze und der Bodenbearbeitungsmaschine angeordnet sind, befestigt sind.

10. Bodenbearteitungsmaschine nach Anspruch 1 oder 2,
dadurch gekennzeichnet,
daß die Federn (58), welche die Abschirmelente (51) in ihre Arbeitslage ziehen, jeweils auf der Innenseite der Abschirmelemente (51) und dem Rahmen (11) bzw. den Tragarmen (12) der Bodenwalze (8) angeordnet sind.

11. Bodenbearbeitungsmaschine nach Anspruch 1 oder 2,
dadurch gekennzeichnet, daß zwischen einem über die Halterung (18, 50) nach hinten ragenden Stück (28) des Abschirmelementes (16, 51) und dem Rahmen (11) der Bodenwalze (8) ein federndes Element (29) angeordnet ist.

12. Bodenbearbeitungsmaschine nach einem der Ansprüche 8 bis 11,
dadurch gekennzeichnet,
daß auf der Innenseite der Abschirmelemente (16, 39, 51) jeweils ein Anschlag (24, 46) angeordnet ist, gegen den die Federn (25, 47, 58) die Abschirmelemente (16, 39, 51) drücken.

13. Bodenbearbeitungsmaschine nach Anspruch 12,
dadurch gekennzeichhet,
daß die Anschläge (46) an der Bodenbearbeitungsmaschine (35, 56) angeordnet sind.

14. Bodenbearbeitungsmaschine nach Anspruch 12,
dadurch gekennzeichnet,
daß der Anschlag (24) an dem Rahmen der Bodenwalze (8) bzw. deren Tragarmen (12) angeordnet ist.

15. Bodenbearbeitungsmaschine nach wenigstens einem der vorangegangenen Ansprüche,
dadurch gekennzeichnet,
daß die Abschirmelemente (16, 39, 51) auf ihrer unteren Vorderseite einen schräg nach vornoben verlaufenden Bereich aufweisen.

16. Bodenbearbeitungsmaschine nach wenigstens einem der vorangegangenen Ansprüche,
dadurch gekennzeichnet,
daß die Abschirmelemente (16, 39, 51) zumindest auf ihrem vorderen - unteren Bereich auf ihrer Schmalseite eine runde Querschnittskontur aufweisen.

17. Bodenbearbeitungsmaschine nach Anspruch 16,
dadurch gekennzeichnet,
daß auf der Schmalseite der Abschirmelemente (16, 39, 51) jeweils ein Rohr (37) angeordnet ist.

18. Bodenbearbeitungsmaschine nach wenigstens einem der vorangegangenen

Ansprüche,
<u>dadurch gekennzeichnet</u>,
daß zumindest der untere Bereich der Abschirmelemente (16, 39, 51) jeweils in Richtung der Bodenwalze (8) abgebogen ist.

**Claims**

1. A tractor-driven ground cultivating machine with driven ground cultivating tools (5, 36, 57) and a follower roller (8) arranged behind the ground cultivating tools, with vertical screening elements (16, 39, 51) which are arranged on the frame of the follower roller through the intermediary of a mounting, the screening elements (16, 39, 51) extend almost approximately in the direction of travel and extend laterally near the outer ground cultivating tools (5') so that they can restrict the amount of soil moved outwards to the sides by the ground cultivating tools, whereby the screening elements (16, 39, 51), whilst retaining their vertical alignment, are arranged to pivot outwards against the force of a spring (25, 47, 58) around a vertical pivot axis (45), which forms part of the mounting, characterised in that the mounting (18, 40, 50) connects the screening elements (16), in their rear area in an area adjacent to the follower roller (8), to the said roller through the intermediary of the pivot axis, in that the mounting has a further pivot axis (21, 41, 53), which extends horizontally and transversely to the direction of travel, this pivot axis (21, 41, 53) is also located in the area adjacent to the follower roller, so that the screening elements (16, 39, 51), whilst retaining their vertical position, can deflect horizontally and vertically, and in that the screening elements together with the follower roller are arranged to be vertically adjustable when compared with the ground cultivating machine, so that they always assume the correct working height whatever the various working depths of the ground cultivating machine.

2. A tractor-driven ground cultivating machine with driven ground cultivating tools (5, 36, 57) and a follower roller (8) arranged behind the ground cultivating tools with vertical screening elements (16, 39, 51), which are arranged on the frame of the follower roller through the intermediary of a mounting, the screening elements (16, 39, 51) extend at least approximately in the direction of travel and extend laterally near the outer ground cultivating tools (5') so that they can restrict the amount of soil moved outwards to the sides by the ground cultivating tools, whereby the screening elements (16, 39, 51), whilst retaining their vertical alignment, are arranged to pivot outwards against the force of a spring (25, 47, 58), characterised in that the mounting (18, 40, 50) connects the screening elements (16), in their rear area in an area adjacent to the follower roller (8), with the same through the intermediary of a ball-and-socket joint (23), in that the mounting has a pivot axis (21, 41, 53), which extends horizontally and transversely to the direction of travel, this pivot axis (21, 41, 53) is also located in the area adjacent to the follower roller, so that the screening elements (16, 39, 51), whilst retaining their vertical alignment, can deflect horizontally and vertically, and in that the screening elements (16, 39, 51) together with the follower roller are arranged to be vertically adjustable when compared with the ground cultivating machine, so that they always assume the correct working height whatever the various working depths of the ground cultivating machine.

3. A ground cultivating machine as claimed in claims 1 or 2, wherein the screening elements (16, 39, 51) extend at least as far as the front edge of the ground roller (8), when seen opposing the direction of travel.

4. A ground cultivating machine as claimed in claim 3, wherein the screening elements (16, 39, 51) extend at least as far as the standing surface (31) of the ground roller (8) on the ground.

5. A ground cultivating machine as claimed in at least one of the preceding claims, wherein the springs (25), which press the screening elements into their working position, are each arranged on the outside of the screening elements.

6. A ground cultivating machine as claimed in claim 5, wherein the springs are designed as flat springs (25, 58).

7. A ground cultivating machine as claimed in claim 6, wherein the springs (25, 58) are arranged on the mounting (18, 50) of the screening elements (19, 51).

8. A ground cultivating machine as claimed in claims 1 or 2, wherein the springs (47), which press the screening elements (39) into their working position, are located between the front inner side of the screening elements (39) and the frame (37) of the ground cultivating machine (35).

9. A ground cultivating machine as claimed in at least one of the preceding claims, wherein the screening elements (51) are secured through the intermediary of their mounting (50) on the supporting arms (12), which are arranged between the ground roller and the ground cultivating machine.

10. A ground cultivating machine as claimed in claims 1 or 2, wherein the springs (58), which pull the screening elements (51) into their working position, are arranged on the inner side of the screening elements (51) and on the frame (11) or the supporting arms (12) of the ground roller (8).

11. A ground cultivating machine as claimed in claims 1 or 2, wherein a resilient element (29) is arranged between a piece (28) of the screening element (16, 51), which projects rearwardly over the mounting (18, 50), and the frame (11) of the ground roller (8).

12. A ground cultivating machine as claimed in any of the claims 8 to 11, wherein a stop (24, 46) is arranged on the inner side of the screening elements (16, 39, 51), against which stop (24, 46) the springs (25, 47, 58) press the screening elements (16, 39, 51).

13. A ground cultivating machine as claimed in claim 12, wherein the stops (46) are arranged on the ground cultivating machine (35, 56).

14. A ground cultivating machine as claimed in claim 12, wherein the stop (24) is arranged on the frame of the ground roller (8) or on the supporting arms (12) of the same.

15. A ground cultivating machine as claimed in at least one of the preceding claims, wherein on the lower front side of the screening elements (16, 39, 51) there is an area, which slopes upwards and forwards.

16. A ground cultivating machine as claimed in at least one of the preceding claims, wherein the screening elements (16, 39, 51) have a round cross-section contour at least on the front lower area on their narrow side.

17. A ground cultivating machine as claimed in claim 16, wherein a tube (37) is arranged on the narrow side of the screening elements (16, 39, 51).

18. A ground cultivating machine as claimed in at least one of the preceding claims, wherein at least the lower area of the screening elements (16, 39, 51) is rounded off in the direction of the ground roller (8).


**Revendications**

1. Machine pour le travail du sol, entraînée par un tracteur, comportant des outils de travail du sol (5, 36, 57), moteurs, ainsi qu'un cylindre suiveur (8) en aval des outils de travail du sol, le châssis du cylindre suiveur portant des éléments formant écrans verticaux (16, 39, 51) montés par l'intermédiaire d'un moyen de fixation, écrans qui sont dirigés au moins approximativement dans la direction de déplacement et s'étendent à côté des outils de travail du sol (5') les plus à l'extérieur pour retenir latéralement les parties de sol déplacées par les outils, les éléments formant écran (16, 39, 51) étant montés pivotants tout en conservant leur alignement vertical par rapport à l'extérieur, chaque fois autour d'une partie de l'axe de pivotement vertical (45) formant le moyen de fixation, contre la force d'un ressort (25, 47, 58), machine caractérisée en ce que le moyen de fixation (18, 40, 50) relie les éléments formant écran (16) au niveau de leur zone arrière dans une zone très proche du cylindre suiveur (8) par l'axe de pivotement de façon que le moyen de fixation comporte un autre axe de pivotement (21, 41, 53) horizontal s'étendant transversalement à la direction de déplacement, axe qui se situe dans la zone très proche du cylindre suiveur de manière que les éléments formant écran (16, 39, 51) puissent s'échapper horizontalement et verticalement en conservant leur position d'alignement vertical et en ce que les éléments formant écran ainsi que le cylindre suiveur sont réglables en hauteur par rapport à la machine de travail du sol pour qu'à des profondeurs de travail différentes de la machine de travail du sol, ces éléments prennent toujours la hauteur de travail correcte.

2. Machine pour le travail du sol, entraînée par un tracteur, comportant des outils de travail du sol (5, 36, 57), moteurs et un cylindre suiveur (8) en aval des outils de travail du sol, le châssis du cylindre suiveur portant par l'intermédiaire d'un moyen de fixation, des éléments formant écran verticaux (16, 39, 51) au moins approximativement dirigés dans la direction de déplacement et qui s'étendent à côté des outils extérieurs (5') pour retenir latéralement les parties de terre déplacées par les outils, les éléments formant écran (16, 39, 51) étant montés pivotants contre la force développée par un ressort (25, 47, 58) respectif, vers l'extérieur tout en conservant leur alignement vertical, machine caractérisée en ce que le moyen de fixation (18, 40, 50) relie les éléments formant écran (16) dans leur zone arrière dans une zone très proche du cylindre suiveur (8) par l'intermédiaire d'une articulation à rotule (23) en étant relié par celle-ci et en ce que le moyen de fixation comporte un axe de pivotement (21, 41, 53) s'étendant horizontalement et transversalement à la direction de déplacement, axe qui se situe également dans une zone très proche du cylindre suiveur de manière que les éléments formant écran (16, 39, 51) puissent s'échapper horizontalement et verticalement tout en conservant leur alignement vertical et en ce que les éléments formant écran (16, 39, 51) ainsi que le cylindre suiveur soient réglables en hauteur par rapport à la machine de travail du sol pour être toujours à la hauteur de travail correcte pour des profondeurs de travail différentes de la machine de travail du sol.

3. Machine de travail du sol selon les revendications 1 ou 2, caractérisée en ce que les éléments formant écran (16, 39, 51) arrivent au moins jusqu'au niveau de l'arête avant du cylindre de sol (8) lorsqu' on regarde dans la direction de déplacement (17).

4. Machine pour le travail du sol selon la revendication 3, caractérisée en ce que les éléments formant écran (16, 39, 51) arrivent sur le sol au moins jusqu'au niveau de la surface d'appui (31) du cylindre de sol (8).

5. Machine de travail du sol selon au moins l'une des revendications précédentes, caractérisée en ce que les ressorts (25) qui poussent les éléments formant écran dans leur position de travail sont prévus respectivement sur le côté extérieur des éléments formant écran.

6. Machine pour le travail du sol selon la revendication 5, caractérisée en ce que les ressorts sont des ressorts lames (25, 58).

7. Machine pour le travail du sol selon la revendication 6, caractérisée en ce que les ressorts (25, 28) sont prévus le support (18, 50) des éléments formant écran (19, 51).

8. Machine pour le travail du sol selon la revendication 1 ou 2, caractérisée en ce que les ressorts (47) qui poussent les éléments formant écran (39) dans leur position de travail sont respectivement prévus entre le côté intérieur avant des éléments formant écran (39) et le châssis (37) de la machine de travail du sol (35).

9. Machine pour le travail du sol selon au moins l'une des revendications précédentes, caractérisée en ce que les éléments formant écran (51) sont fixés par leur moyen de fixation sur les bras de support (12) prévus entre le cylindre suiveur et la machine de travail du sol.

10. Machine de travail du sol selon la revendication 1 ou 2, caractérisée en ce que les ressorts (58) qui tirent les éléments formant écran (51) dans leur position de travail sont chaque fois prévus sur le côté intérieur des éléments formant écran (51) et le châssis (11) ou les bras de support (12) du cylindre suiveur (8).

11. Machine pour le travail du sol selon la revendication 1 ou 2, caractérisée par un élément à ressort (29) prévu entre une pièce (28) de l'élément formant écran (16, 51) dirigé vers l'arrière au-delà du moyen de fixation (18, 50) et le châssis (11) du cylindre suiveur (8) on a un élément à ressort (29).

12. Machine pour le travail du sol selon l'une des revendications 8 à 11, caractérisée en ce que sur le côté intérieur des éléments formant écran (16, 39, 51) on a chaque fois une butée (24, 46) contre laquelle les ressorts (25, 47, 58) poussent les éléments formant écran (16, 39, 51).

13. Machine pour le travail du sol selon la revendication 12, caractérisée en ce que les butées (46) sont prévues sur la machine de travail du sol (35, 56).

14. Machine de travail du sol selon la revendication 12, caractérisée en ce que la butée (24) est prévue sur le châssis du cylindre suiveur (8) ou sur ses bras de support (12).

15. Machine pour le travail du sol selon au moins l'une des revendications précédentes, caractérisée en ce que les éléments formant écran (16, 39, 51) présentent au niveau de leur face avant inférieure une zone inclinée vers l'avant et vers le haut.

16. Machine pour le travail du sol selon au moins l'une des revendications précédentes, caractérisée en ce que les éléments formant écran (16, 39, 51) ont un contour à section ronde sur leur tranche au moins au niveau de leur partie avant inférieure.

17. Machine pour le travail du sol selon la revendication 16, caractérisée en ce qu'un tube (37) est prévu sur la tranche de l'élément formant écran (16, 39, 51).

18. Machine pour le travail du sol selon au moins l'une des revendications précédentes, caractérisée en ce qu'au moins la zone inférieure des éléments formant écran (16, 39, 51) est recourbée en direction du cylindre suiveur (8).

# FIG. 1

# FIG. 2

FIG.3

FIG.4

# FIG.5

**FIG. 6**

**FIG. 7**

FIG. 8

12

52

44

43

29

44

8

58

57

55

56

46

51

FIG.9

8    11

55

54

52

59

56

12

52    58

46    51

50    52'  45  44  43    53 54